# EUROPÄISCHE PATENTANMELDUNG

(11) **EP 2 028 041 A1**
(43) Veröffentlichungstag der Anmeldung: **25.02.2009**
(21) Anmeldenummer: 07016547.7
(22) Anmeldetag: 23.08.2007
(51) Int. Cl.: B60N 2/44, B60N 2/64

(54) **Sitz und Liegesystem**

(71) Anmelder: ETH Zürich, 8092 Zürich (CH)
(72) Erfinder: Sauter, Michael, 8400 Winterthur (CH); Bezzola, Andri, 7523 Mandulain (CH)
(74) Vertreter: Kley, Hansjörg

(57) **Zusammenfassung**

Ein Sitz (1) ist aus einem Rückenteil (2) und einem Sitzteil (3) gebildet. Das Rückenteil (2) enthält eine Mehrzahl von mit einem Führungsprofil (31) zusammengehaltenen Stützelementen (30). Jedes Stützelement (30) ist vorzugweise einstückig ausgeführt und weist eine konstruktiv ähnliche doppel-rippenpaarartige Struktur auf, bei der im vertebralen Bereich diese Struktur aus steifen Stegen (23) und im extremalen Bereich aus nachgiebigen (24) und aus steifen Stegen gebildet ist. Die steifen Stege (23) sind mit einem Hebel (21) verbunden, auf den mit einem Aktuator (20) eine Kraft einleitbar ist, um die Anfangskontur (27) des Stützelementes (30) an eine torsoförmige Zielkontur (28) zu verformen. Der Sitz (1) findet vorzugsweise in der Automobiltechnik Anwendung, er kann jedoch auch in der Aviatik, bei anderen Transportsystemen eingesetzt werden. Die Erfindung kann auch für ein Liegesystem (1) eingesetzt werden.

## Beschreibung

Die Erfindung bezieht sich auf einen Sitz gemäss dem Oberbegriff des Patentanspruchs 1 sowie auf ein Liegesystem nach dem Oberbegriff des Patentanspruches 9.

Das Hauptanwendungsgebiet des vorstehend genannten Erfindungsgegenstand betrifft ganz eindeutig die Automobiltechnik und demzufolge einen Fahrzeugsitz. Die vorliegende Erfindung ist jedoch nicht auf Sitze für ein Transportgerät beschränkt, sondern kann beispielsweise auch als Liegesystem zur Aufnahme und Lagerung eines Patienten eingesetzt werden, um Dekubitus-Erscheinungen entgegen wirken zu können.

Fahrzeugsitze haben sehr wichtige unterstützende Funktion des Chauffeurs/Passagiers, die direkt und indirekt weit über das blosse Sitzen hinausgehen; insbesondere die Passform der Fahrzeugsitze, wie auch der durch den Fahrzeugsitz gegebenen Seitenhalt des Chauffeurs/Passagiers sind für das Wohlbefinden des Chauffeurs/Passagiers von wesentlicher Bedeutung, minimieren Ermüdungserscheinungen und beugen allfälligen Beschwerden, z.B. Rückenbeschwerden, vor. Zusätzlich sollen die Sitze eine sogenannt fahrdynamische Adaption der Körperabstützung gewährleisten. Damit ist eine Steuerung/Regelung gemeint, so dass beim Auftreten von Beschleunigungen, besonders von Querbeschleunigung der Chauffeur/Passagier durch eine entsprechende gesteuerte oder geregelte Einstellung der Stützung oder einer Neigung beim Entgegenwirken der Beschleunigungskräfte unterstützt wird. In dieser Schrift wird anstelle der Funktionsbezeichnungen Chauffeur/Passagier der Einfachheit halber in äquivalenter Weise der Begriff Person verwendet. Damit macht es auch Sinn hinsichtlich eines Liegesystems, auf das eine Person sich legen kann oder gelegt werden kann.

Ein fahrdynamischer Fahrzeugsitz ist in der Schrift WO 2001/085487 A1 [1] offenbart. Ein Mass für eine Adaption der Körperabstützung wird durch ein im Fahrzeugsitz integriertes Adaptionssystem eingestellt. Dieses Mass mit abgespeicherten Daten über den Strassenlauf und die aktuellen Fahrzeugdaten prädiziert. Der Fahrzeugsitz selber weist Luftkissen auf, die den Torso der Person im Becken- und Rückenbereich zusätzlich abstützen. Die Luftkissen werden mit einem Luftdruck entsprechend dem vorgenannten Mass beaufschlagt. Der Sitz selber ist in konventioneller Bauweise ausgeführt bis auf die vorgenannt zusätzlichen Luftkissen.

In DE 10 2004 017 212 B3 [2] ist ein Kraftfahrersitz mit einer Rückenlehne und einem Sitzteil offenbart, bei dem die Polsterung eine luftdicht umgebende Umhüllung aufweist, so dass Rückenlehne und Sitzteil klappbar sind. Dadurch ist eine sehr platzsparende Ausgestaltung im zugeklappten Zustand (Cargo-Position) und im aufgeklappten Zustand durch die mit Druckluft versehene Umhüllung ein ansprechender Sitzkomfort gewährleistet.

Der Sitz gemäss WO 2001/085487 A1 [1] ist in konventioneller Technik ausgeführt, d.h. besteht nicht nur aus vielen Einzelteilen, sondern der Sitz weist darüber hinaus eine erhebliches Gewicht auf.

Ausgehend von diesem Stand der Technik stellt sich für die vorliegende Erfindung die Aufgabe, einen adaptiven Sitz insbesondere für ein Transportgerät zu schaffen, der als Reaktion auf externe Kräfte und Aktuatorkräfte sich durch Deformation an die Kontur einer Person anpasst, der durch die Fahrt und den Fahrtweg auftretende, auf die Person wirkende Beschleunigungen wirksam kompensiert und welcher aus verhältnismässig wenigen Teilen von geringer Masse gebaut werden kann. Ebenso soll ein Liegesystem geschaffen werden, das als Reaktion auf externe Kräfte und Aktuatorkräfte sich durch Deformation an die Kontur einer Person anpasst, um z.B. die negativen Dekubitus-Einwirkungen zu minimieren.

Diese Aufgabe wird für einen Sitz durch die im Patentanspruch 1 angegebenen Merkmale gelöst sowie für ein Liegesystem durch die im Patentanspruch 9 angegebenen Merkmale gelöst.

Die Erfindung hebt sich durch die neuartige Anpassungsfähigkeit hervor, welche durch gezielte Deformation der Strukturen und durch rippen-ähnliche Stapelung erreicht wird. Gleichzeitig reduziert sich die Anzahl der Teile auf ein Minimum, was sowohl Gewicht wie auch Herstell/Montagekosten reduziert.

Der vorliegende Sitz ist nicht nur für ein Transportgerät verwendbar, sondern wie eingangs bereits ausgeführt auch für Einsatz als Liege- und Sitzgerät.

Die vorliegende Erfindung erlaubt somit:
a) Anpassung der Stützelemente an eine torsoförmige Zielkontur durch Deformation als Reaktion auf auftretende externe Kräfte, z.B. durch die Gewichtskraft einer Person;
b) Anpassung der Stützelemente an eine torsoförmige Zielkontur durch Deformation als Reaktion auf auftretende externe Kräfte, z.B. durch die Gewichtskraft einer Person, und Aktuatorkräfte;
c) Anpassung der Stützelemente an eine torsoförmige Zielkontur durch Deformation als Reaktion auf auftretende externe Kräfte, z.B. durch Aktuatorkräfte;
d) die Stapelung der Stützelemente mit Hilfe der Führung ermöglicht eine individuelle Anpassung an eine Person, insbesondere an die jeweilige Position/Höhe der torsoförmige Zielkontur;
e) Fahrdymische Anpassung/Unterstützung der Stützelemente an eine torsoförmige Zielkontur mit Hilfe von Sensorik und Aktuatorik.

Die Wirkungsweise der vorgenannten Anpassung unterscheidet sich zu einer Polsterung dadurch, dass die Anpassung/Deformation hauptsächlich durch Biegung der Stege geschieht. Im Gegensatz dazu wirkt die Polsterung durch Stauchung/Streckung und Scherung des Polstermaterials. Ein anderer Punkt ist, dass der Erfindungsgegenstand eine Gestalt-/Konturveränderung erfährt, d.h. nicht wie z.B. beim herkömmlichen Sitz, wo in starre Struktur und in Polsterung unterteilt wird, verändert sich die Anfangskontur 27, die Seitenkontur und marginal die Rückenkontur 29.

Vorteilhafte Weiterbildungen sind Gegenstand der abhängigen Ansprüche.

Ein Ausführungsbeispiel der vorliegenden Erfindung wird nachstehend anhand der Figuren erläutert:
- Fig. 1: Querschnitt durch ein Stützelement;
- Fig. 2a: Perspektivische Ansicht eines aus mehreren Stützelementen gebildeten Sitzes
- Fig. 2b: Seitenansicht eines aus mehreren Stützelementen gebildeten Sitzes;
- Fig. 3: Perspektivische Ansicht eines Stützelementes mit einer partiell dargestellten Führung;
- Fig. 4: Darstellung des Bewegungsablaufes eines Stützelementes.

Zur Erläuterung Ausführungsform «Sitz» der vorliegenden Erfindung wird auf das Vokabular der Anatomie zurückgegriffen, weil die Ausgestaltung des Sitzes 1 mit dem Rückenteil 2 bildenden Stützelement 30 eine direkte Analogie zur Anatomie des Torsos eines Menschen nahelegt.

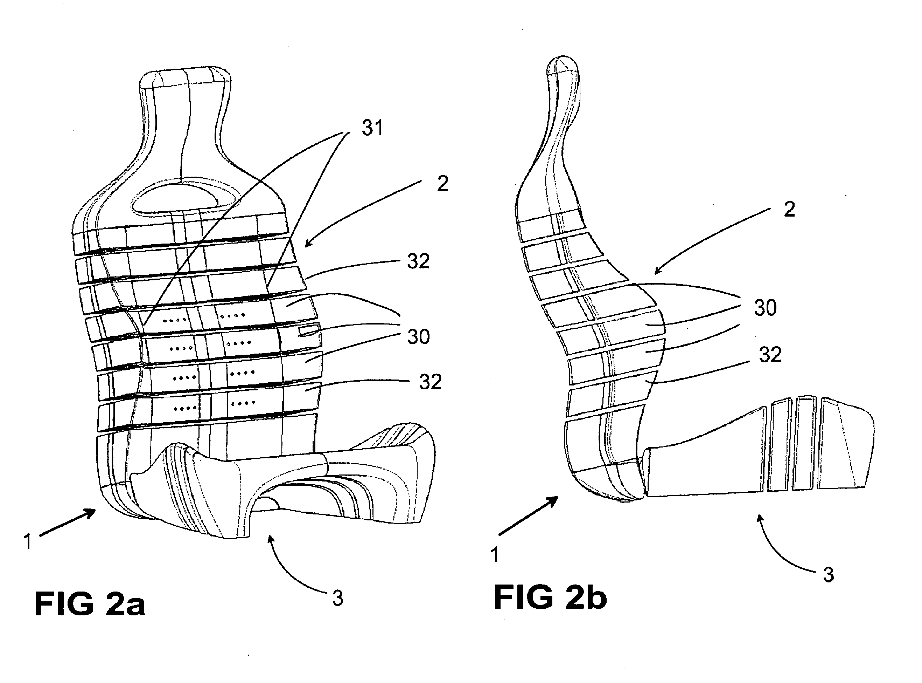

Die Figuren 2a und 2b zeigen einen Sitz 1 in einer perspektivischen Ansicht und in einer Seitenansicht. Der Sitz ist in einen Rückenteil 2 - auch Rückenlehne 2 genannt - und einen Sitzteil 3 gegliedert. Das Rückenteil 2 wird gebildet aus einer Mehrzahl von Stützelementen 30/32. Diese Stützelemente 30/32 sind konstruktiv ähnlich, jedoch entsprechend der mutmasslichen Krümmung eines Torsos 10 einer Person bzw. eines Rückens von verschiedener Dimension. Die Stützelemente 30/32 werden durch ein Führungsprofil 31 zusammengehalten. Die Stützelemente 30/32 sind vorzugsweise aus Kunststoff hergestellt; dadurch ist ein relativ geringes Gewicht aus Materialgründen möglich. Die Wahl vom Kunststoff hängt von den Anforderungen ab wie z.B. Dehngrenze/Ermüdung/Brandschutz. Ein möglicher Kunststoff ist ein Duroplast, vorzugsweise faserverstärkt. Die weitere Gewichtsersparnis ergibt sich durch die Konstruktion der Stützelemente 30/32.

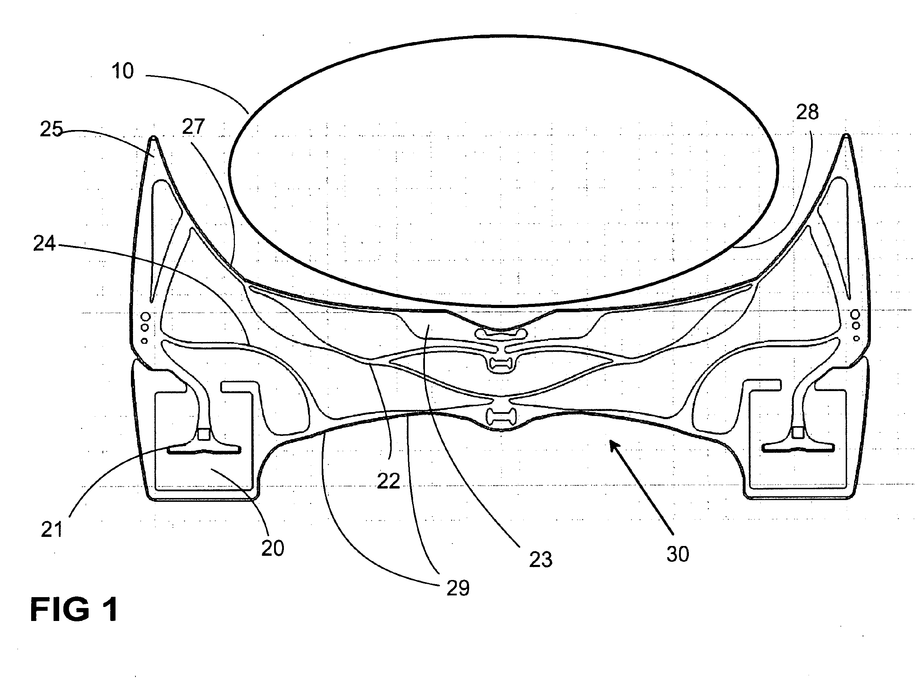

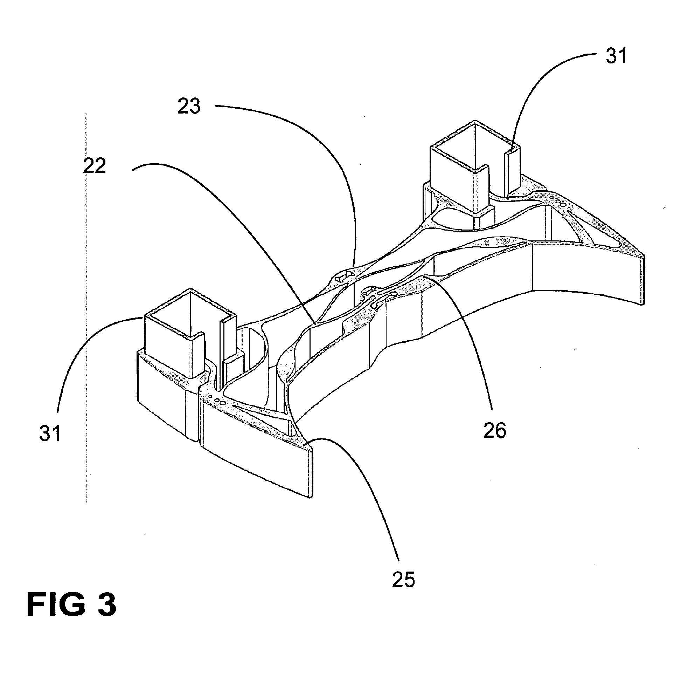

Zur weiteren Erläuterung wird auf die Figuren 1 mit einer Querschnittdarstellung eines Stützelementes 30/32 und auf die Figur 3 mit einer perspektivischen Ansicht auf ein Stützelement 30/32 Bezug genommen. Ein Stützelement 30/32 weist eine rippenpaarartige Struktur auf. Im vertebralen Bereich in Richtung des sitzenden Person 10 - ohne dass hier in diesem Bereich des Stützelementes 30/32 zwingend eine Führung - ist diese Struktur in Form von steifen Stegen 23 ausgebildet. Diese Steifigkeit wird nicht allein durch das Material, sondern hauptsächlich durch die Dicke - also der Dimensionierung - der Stege 23 erreicht. Weiter gegen den extremalen Bereich gegen die Konturspitze 25 - also gegen die Rippen-Enden - sind nachgiebige Stege 24 angeordnet. Die Nachgiebigkeit und Biegsamkeit wird durch die Dicke, also durch die «Dimensionierung» der Stege 24 erreicht. Die nachgiebigen Stege 24 sind mit einem Hebel 21 wie auch mit der Startkontur 27 fest verbunden. Durch eine durch einen Aktuator 20 ausgelösten Kraft-Einwirkung auf den Hebel 21
- deshalb auch der Begriff Kraft-Einleitung 21 - wird die Anfangskontur 27 zur Zielkontur 28 verformt. Die Rückenkontur 29 des Stützelementes 30/32 ist aufgrund der Struktur wie auch durch die im extremalen Bereich 40 paarig angeordneten Führungsprofil im wesentlichen starr. Die Stützelemente können als aktive Stützelemente 30 oder als passive Stützelemente 32 ausgebildet sein. Beide Arten von Stützelementen 30/32 sind durch die Führung 31 miteinander verbunden. Für die aktiven Stützelemente 30 ist in der Führung ein Aktuator 20 angeordnet im Gegensatz zu passiven Stützelemente 32. Der Aktuator 20 ist vorzugsweise als Luftkissen ausgebildet. Dabei kann je ein Luftkissen 20 pro Stützelement 32 vorgesehen sein, ebenso ist es durch eine längliche Ausgestaltung der Luftkissen 20 möglich, dass ein Luftkissen die Hebel einer Mehrzahl von Stützelementen 30 mit einer Kraft beaufschlagt. Die Luftkissen 20 werden von einer externen gesteuerten oder geregelten Quelle so mit Druckluft versehen, dass beim Erreichen der Zielkontur die Stützelemente 30 für die sitzende Person bzw. ihren Torso 10 eine möglichst gute Stütze leisten und durch die Fahrdynamik oder die Lage des Sitzes bzw. des Transportgerätes auftretende Kräfte so kompensiert werden und die sitzende Person dies nur geringfügig durch eigene willentlich oder reflexartige wirkende Muskelkräfte korrigieren muss. Bei einer geregelten Ausgestaltung sind noch Sensoren vorzusehen, dies ist jedoch in den Figuren nicht weiter ausgeführt und die korrekte Anordnung von Sensoren zu diesem Regelkreis ergibt sich aufgrund von fachmännischen Massnahmen. Die passiven Stützelemente 32 sind im Sinne der Geometrie ähnlich den aktiven Stützelementen 30, sie enthalten einfach keinen Aktuator 20.

Die vorliegende Erfindung ist für einen Sitz 1 beschrieben worden. Eine Ausführungsform eines erfindungsgemässen Liegesystems 1 unterscheidet sich vom Sitz insoweit, als Sitz- und Rückenteil nicht gesonderte Teile sind, sondern dass das Liegesystem 1 ein Rückenteil 2 aufweist, dass aneinandergereiht eine Mehrzahl von aktiven Stützelementen 30 und passiven Stützelementen 32 enthält. Wie bei Sitz 1 sind auch beim Liegesystem diese Stützelement durch eine Führung oder ein Führungsprofil 31 gehalten. Die weitere Ausgestaltung und Funktion der Führungselemente 30 /32 unterscheidet sich von jener bei einem Sitz 1 nicht.

Vorstehend wurde die Einstellung des Luftdruckes hinsichtlich der Fahrdynamik in einer gesteuerten oder geregelten Weise erwähnt. Ebenso ist es auch möglich, dass die Einstellung manuell durch eine Interaktion einer Person erfolgt.

Für beide Ausführungsformen «Sitz» 1 bzw. «Liegesystem» 1 kann der Aktuator 20 nicht nur als ein Luftkissen 20 ausgebildet sein. Der Aktuator 20 kann elektrisch als rotierender Elekromotor oder als Linearmotor ausgeführt sein. Ebenso kann der Aktuar auf einem hydraulischen Funktionsprinzip beruhen.

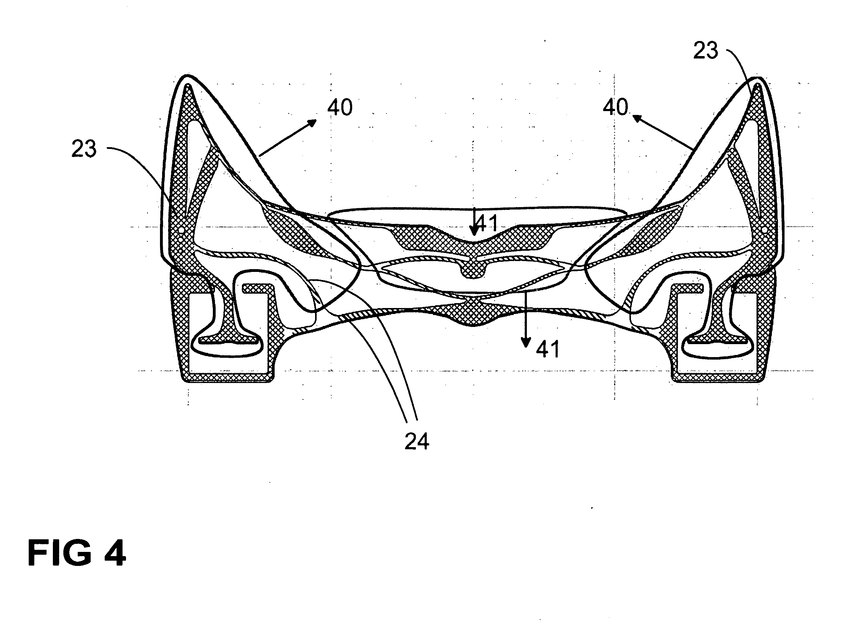

Der Bewegungsablauf eines Stützelementes 30 wird anhand der Figur 4 erläutert. Die mit doppelter Schraffur versehenen Stege 23 sind aufgrund ihrer Dimension steif, während die einfach schraffierten Stege 24 aufgrund ihrer relativ dünnen Dimension nachgiebige Eigenschaften aufweisen. Mit dem Bezugszeichen 40, dem korrespondierenden Pfeil und der dazugehörenden Umrandung ist die Bewegungsrichtung des extremalen Bereiches 40 eines Stützelementes 30 in Richtung eines Torso's 10 (in Figur 4 nicht dargestellt) gezeigt. Die Bewegung wird - wie weiter oben ausgeführt - durch einen Aktuator 20 ausgelöst. Demgegenüber sind mit dem Bezugszeichen 41 die korrespondierenden Pfeile und der dazugehörenden Umrandung die Bewegungsrichtung 41 der vertebralen Teile 41 bzw. des vertebralen Bereiches 41 eines Stützelementes 30 dargestellt. Es ist darauf hinzuweisen, dass sich diese in Richtung Rückenkontur 29 bewegen. Die Beweglichkeit ist durch die im vertebralen Bereich 41 vorhandenen dünnen Stege 24 (einfache Schraffur) sichergestellt. Die steifen Stege 23 (doppelte Schraffur) weisen gegenüber den nachgiebigen Stegen 24 eine deutlich grössere Dicke auf. Dies ist vorstehend in anderen Worten mit dem Begriff Dimension erläutert worden.

Denkbar wäre, die Funktion eines Stützelementes 30, 32 mit einem zusätzlichen Gelenk realisieren. Das hätte aber den Nachteil, dass das Stützelement nicht mehr einstückig ausgeführt werden kann. Die Stützelemente 30, 32 sind vorzugsweise nach dem Spritzgiessverfahren gefertigt.

### Liste der verwendeten Bezugszeichen; Glossar

- 1: Sitz; Liegesystem
- 2: Rückenteil, Rückenlehne
- 3: Sitzteil
- 10: Torso in einer Querschnittsdarstellung
- 20: Aktuator, z.B. Luftkissen
- 21: Kraft-Einleitung, Hebel, Arm
- 22: Verbindungszone der Stege
- 23: Steg/ Steife Zone, steifer Steg
- 24: Steg/ Nachgiebige Zone, nachgiebiger Steg
- 25: Konturspitze
- 27: Startkontur/ Anfangskontur
- 28: Zielkontur
- 29: Rückenkontur
- 30: Stützelement; aktives Stützelement
- 31: Führung; Führungsprofil
- 32: Stützelement; passives Stützelement
- 40: Extremaler Bereich eines Stützelementes; Bewegungsrichtung des extremalen Bereichs eines Stützelementes;
- 41: Vertebraler Bereich eines Stützelementes; Gegenläufige Bewegungsrichtung des vertebralen Bereiches eines Stützelementes

### Liste der zitierten Dokumente

[1] WO 2001/085487 A1
   «Verfahren zur Fahrdynamischen Adaption der Körperabstützung eines Sitzenden in einem Fahrzeug und Fahrzeugsitz hierzu»
   DAIMLERCHRYSLER AG, DE - 70567 Stuttgart
[2] DE 10 2004 017 212 B3
   «Kraftfahrzeugsitz»
   Faurecia Autositze GmbH & Co. KG; DE Stadthaben

## Patentansprüche

1. Sitz (1) der in ein Rückenteil (2) und in ein Sitzteil (3) gegliedert ist, wobei das Rückenteil (2) eine Mehrzahl von mit einem Führungsprofil (31) gestapelten Stützelementen (30, 32) enthält und gegen den Torso einer diesen Sitz benutzenden Person eine Anfangskontur (27) aufweist,
**dadurch gekennzeichnet, dass**
(A) jedes Stützelement (30, 32) eine rippenpaarartige Struktur aufweist;
(B) diese Struktur aus steifen Stegen (23) und aus nachgiebigen Stegen (24) gebildet ist, wobei die steifen Stege (23) gegenüber den nachgiebigen Stege (24) eine grössere Dicke aufweisen;
(C) die steifen Stege (23) in den extremalen Bereichen (40) des Stützelementes (30) mit einem Hebel (21) verbunden sind,
(D) einzelne Stützelemente (30) einen Aktuator (20) enthalten, mit dem auf den Hebel (21) eine Kraft einleitbar ist, um die Anfangskontur (27) des Stützelementes (30) an eine torsoförmige Zielkontur (28) zu bewegen; und dass
(E) die Stützelemente (30, 32) untereinander ähnlich sind.

2. Sitz (1) nach Anspruch 1,
**dadurch gekennzeichnet, dass**
jedes Stützelement (30, 32) einstückig ausgeführt ist

3. Sitz (1) nach Anspruch 1 oder 2,
**dadurch gekennzeichnet, dass**
die Anfangskontur (27) in einem extremalen Bereich (40) der Stützelemente (30, 32) zum Torso (10) bewegbar ist und **dadurch** sich die Anfangskontur (27) an die Zielkontur (28) angleicht.

4. Sitz (1) nach einem der Ansprüche 1 bis 3,
**dadurch gekennzeichnet, dass**
die Stützelemente (30, 32) aus Kunststoff gefertigt sind.

5. Sitz (1) nach Anspruch 4,
**dadurch gekennzeichnet, dass**
als Kunststoff ein Duroplast vorgesehen ist.

6. Sitz (1) nach einem der Ansprüche 1 bis 5,
**dadurch gekennzeichnet, dass**
der Aktuator (20) als Luftkissen (20) ausgebildet ist.

7. Sitz (1) nach Anspruch 6,
**dadurch gekennzeichnet, dass**
das Luftkissen (20) sich über mehrere Stützelemente (30) erstreckt.

8. Sitz (1) nach einem der Ansprüche 1 bis 5,
**dadurch gekennzeichnet, dass**
der Aktuator (20) elektrisch oder hydraulisch betätigbar ist.

9. Liegesystem (1), das ein Rückenteil (2) enthält und wobei das Rückenteil (2) eine Mehrzahl von mit einem Führungsprofil (31) aneinandergereihten Stützelementen (30, 32) aufweist und gegen den Torso (10) einer dieses Liegesystem (1) benutzenden Person eine Anfangskontur (27) aufweist,
**dadurch gekennzeichnet, dass**
(A) jedes Stützelement (30, 32) eine rippenpaarartige Struktur aufweist;
(B) diese Struktur aus steifen Stegen (23) und aus nachgiebigen Stegen (24) gebildet ist, wobei die steifen Stege (23) gegenüber den nachgiebigen Stege (24) eine grössere Dicke aufweisen;
(C) die steifen Stege (23) in den extremalen Bereichen (40) des Stützelementes (30) mit einem Hebel (21) verbunden sind;
(D) einzelne Stützelemente (30) einen Aktuator (20) enthalten, mit dem auf den Hebel (21) eine Kraft einleitbar ist, um die Anfangskontur (27) des Stützelementes (30) an eine torsoförmige Zielkontur (28) zu verformen; und dass
(E) die Stützelemente (30, 32) untereinander ähnlich sind.

10. Liegesystem (1) nach Anspruch 9,
**dadurch gekennzeichnet, dass**
jedes Stützelement (30, 32) einstückig ausgeführt ist.

11. Liegesystem (1) nach Anspruch 9 oder 10,
die Anfangskontur (27) in einem extremalen Bereich (40) der Stützelemente (30, 32) zum Torso (10) bewegbar ist und **dadurch** sich die Anfangskontur (27) an die Zielkontur (28) angleicht.

12. Liegesystem (1) nach einem der Ansprüche 9 bis 11,
**dadurch gekennzeichnet, dass**
die Stützelemente (30, 32) aus Kunststoff gefertigt sind.

13. Liegesystem (1) nach Anspruch 12,
**dadurch gekennzeichnet, dass**
als Kunststoff ein Duroplast vorgesehen ist.

14. Liegesystem (1) nach einem der Ansprüche 9 bis 13,
**dadurch gekennzeichnet, dass**
der Aktuator (20) als Luftkissen (20) ausgebildet ist.

15. Liegesystem (1) nach Anspruch 13,
**dadurch gekennzeichnet, dass**
das Luftkissen (20) sich über mehrere Stützelemente (30) erstreckt.

16. Liegesystem (1) nach einem der Ansprüche 9 bis 13,
**dadurch gekennzeichnet, dass**
der Aktuator (20) elektrisch oder hydraulisch betätigbar ist.
